# EUROPEAN PATENT SPECIFICATION

(11) **EP 1 691 437 B1**
(45) Date of publication and mention of the grant of the patent: **12.08.2015**
(21) Application number: 04817427.0
(22) Date of filing: 04.11.2004
(51) Int. Cl.: H01M 8/04, H01M 8/10, H01M 16/00

(54) **LIQUID-TYPE FUEL CELL SYSTEM AND CONTROL CIRCUIT THEREOF**
BRENNSTOFFZELLENSYSTEM DES FLÜSSIGKEITSTYPS UND STEUERSCHALTUNG DAFÜR
SYSTEME DE CELLULE A COMBUSTIBLE LIQUIDE ET SON CIRCUIT DE COMMANDE

(30) Priority: 04.11.2003 JP 2003374605
(43) Date of publication of application: 16.08.2006
(73) Proprietor: Murata Manufacturing Co., Ltd., Nagaokakyo-shi, Kyoto 617-8555 (JP)
(72) Inventor: SAKAI, Hirotaka, 105-8001 Tokyo (JP); HASEBE, Hiroyuki, 105-8001 Tokyo (JP)
(74) Representative: Henkel, Breuer & Partner
(86) International application number: PCT/JP2004/016331
(87) International publication number: WO 2005/043664

(56) References cited:
- EP-A- 1 233 468
- JP-A- 2002 289 210
- JP-A- 2002 289 210
- JP-A- 2002 362 470
- JP-A- 2003 197 210
- US-A1- 2002 081 468
- US-A1- 2002 162 694

## Description

### Technical Field

The present invention relates to a liquid-type fuel cell system, more particularly to a liquid-type fuel cell system which spontaneously supplies liquid fuel from a fuel tank to an electromotive unit without using any liquid feed mechanism such as a pump, and a control circuit for the system.

### Background Art

In recent years, there has been developed a liquid-type fuel cell system which directly extracts protons from liquid fuel such as methanol or ethanol to generate power. Since this type of fuel cell does not require any reformer and fuel volume is minimized, the fuel cell is expected as a power source of a portable electronic device such as a portable personal computer, a personal digital assistant (PDA), a cellular phone, a video or audio player, or a game machine.

This type of system can be classified into a type which controls supply of liquid fuel from a fuel tank to an electromotive unit by use of a liquid feed pump or the like, and a type which spontaneously supplies the fuel without using any liquid feed pump or the like. In the former type of system, it is possible to control the supply of the liquid fuel to be optimum by the liquid feed pump in accordance with a power value required from a load side.

On the other hand, in the latter spontaneously supplying type, the fuel is steadily supplied to the electromotive unit regardless of a magnitude of the power value required from the load side, or regardless of whether or not the load operates. Therefore, the fuel is uselessly consumed in many cases, and fuel efficiency is degraded.

US2002/081468 A1 discloses a liquid-type fuel cell system comprising a dedicated auxiliary power supply unit which is used to supply electrical power to a liquid-type fuel electromotive unit when powering up this unit, and to supply electric power to the control systems of the liquid-type fuel electromotive unit.

US2002/162694 A1 is directed to a liquid-type fuel cell system for a car or an automobile comprising an auxiliary power supply unit which supplies power to both, the load and to the liquid-type fuel cell unit. The electromotive unit is one which is equipped with liquid feed pumps and a similar devices in order to supply the necessary amount of fuel to the device.

Furthermore, EP 1 233 468 A discloses a liquid-type fuel cell system according to the pre-characterizing part of claim 1.

### Disclosure of the Invention

An object of the present invention is to provide a liquid fuel cell system of a type to supply fuel spontaneously, in which wasteful consumption of the fuel is reduced, and fuel efficiency can thus be increased to extend a continuous power generating time, and a control circuit for the system.

According to the invention the above object is achieved by a liquid-type fuel cell system according to claim 1. The dependent claims are directed to different advantageous aspects of the invention.

### Brief Description of Drawings

FIG. 1 is a schematic constitution diagram of a direct-type methanol fuel cell in a first embodiment of a liquid-type fuel cell system of this invention;
FIG. 2 is a block diagram showing a circuit constitution of the direct-type methanol fuel cell system shown in FIG. 1;
FIG. 3 is a flowchart showing a control procedure and control contents of a control circuit in the direct-type methanol fuel cell system shown in FIG. 2;
FIG. 4 is a block diagram showing a circuit constitution of a direct-type methanol fuel cell in a second embodiment of the liquid-type fuel cell system of the present invention;
FIG. 5 is a flowchart showing a control procedure and control contents of a control circuit in the direct-type methanol fuel cell system shown in FIG. 4;
FIG. 6 is a block diagram showing a circuit constitution of a direct-type methanol fuel cell in a third embodiment of the liquid-type fuel cell system of the present invention; and
FIG. 7 is a flowchart showing a control procedure and control contents of a control circuit in the direct-type methanol fuel cell system shown in FIG. 6.

### Best Mode for Carrying Out the Invention

There will be first described outlines of various aspects of this invention.

In a first aspect of this invention, a system includes: a liquid-type fuel electromotive unit which outputs a first power; a fuel supply unit which supplies liquid fuel to this liquid-type fuel electromotive unit; an auxiliary power supply unit which is charged with the first power output from the liquid-type fuel electromotive unit to output a charged second power; and a control circuit which controls the supply of the fuel. Moreover, this control circuit monitors a charged state of the auxiliary power supply unit, and controls the supply of the liquid fuel from the fuel supply unit to the liquid-type fuel electromotive unit based on the monitoring result.

Therefore, the supply of the liquid fuel from the fuel supply unit to the liquid-type fuel electromotive unit is controlled in accordance with a charged state of the auxiliary power supply unit, for example, a value of a charging voltage or current of the auxiliary power supply unit. Therefore, wasteful consumption of the fuel is reduced as compared with a case where the fuel is steadily supplied to the electromotive unit regardless of a magnitude of a power value required from, for example, a load side. Accordingly, fuel efficiency can be improved to extend a continuous power generating time.

The following two constitutions are considered as specific constitutions for realizing the above first aspect.

The first constitution compares a charging voltage of the auxiliary power supply unit with a first threshold value to limit the supply of the liquid fuel from the fuel supply unit to the liquid-type fuel electromotive unit in a case where the charging voltage of the auxiliary power supply unit is not less than the first threshold value.

In such constitution, in a case where the charged state of the auxiliary power supply unit reaches a fully charged state or a charged state close to the fully charged state, the supply of the liquid fuel to the liquid-type fuel electromotive unit is limited. In general, in a case where the auxiliary power supply unit is charged until the unit attain the fully charged state or the charged state close to the fully charged state, it is possible for the auxiliary power supply unit to achieve the power required for a load device. Therefore, the liquid-type fuel electromotive unit does not have to be fully operated. Therefore, even when the supply of the liquid fuel to the liquid-type fuel electromotive unit is limited, there is no trouble. Accordingly, the wasteful consumption of the fuel is suppressed, and this makes possible the improvement of the fuel efficiency and the extension of the continuous power generating time.

The second constitution compares the charging voltage of the auxiliary power supply unit with a second threshold value which is smaller than the first threshold value to limit the supply of the liquid fuel from the fuel supply unit to the liquid-type fuel electromotive unit in a case where the charging voltage of the auxiliary power supply unit is not more than the second threshold value.

In such constitution, in a case where the charged state of the auxiliary power supply unit reaches a discharged state, the supply of the liquid fuel to the liquid-type fuel electromotive unit is limited. In general, in a case where the power is discharged from the auxiliary power supply unit until the discharged state is obtained, the power required for the load device cannot be satisfied by the liquid-type fuel electromotive unit only. Therefore, even when the supply of the liquid fuel to the liquid-type fuel electromotive unit is limited, there is substantially no disadvantage. Accordingly, the wasteful consumption of the fuel is suppressed, thereby making possible the improvement of the fuel efficiency and the extension of the continuous power generating time.

Moreover, in a second aspect of this invention, a control circuit monitors whether or not a liquid-type fuel cell system is attached to a load device, and controls supply of liquid fuel from a fuel supply unit to a liquid-type fuel electromotive unit based on the monitoring result. Specifically, in a case where it is detected that the liquid-type fuel cell system has been removed from the load device, the supply of the liquid fuel from the fuel supply unit to the liquid-type fuel electromotive unit is limited.

In such constitution, the fuel supply to the liquid-type fuel electromotive unit is limited (e.g., stopped) in a state in which the liquid-type fuel cell system is not attached to the load device. This suppresses wasteful consumption of the fuel in a state in which the liquid-type fuel cell system does not have to operate, thereby making possible improvement of fuel efficiency and extension of a continuous power generating time.

Furthermore, in a third aspect of this invention, a system includes: a receiving unit which receives an operation display signal indicating presence of an operation of a load device; and a control circuit. Moreover, this control circuit controls supply of liquid fuel from a fuel supply unit to a liquid-type fuel electromotive unit based on the operation display signal received from the receiving unit. To be more specific, in a case where the operation display signal received from the receiving unit indicates an inoperative state of the load device, the circuit limits the supply of the liquid fuel from the fuel supply unit to the liquid-type fuel electromotive unit.

In such constitution, for example, in a case where a power switch of the load device is turned off, or the load device is brought into a substantially non-operating sleep state even when the switch is turned on, the supply of the liquid fuel to the liquid-type fuel electromotive unit is limited based on the operation display signal output from the load device. Therefore, even in this case, wasteful consumption of the fuel is prevented, and this makes possible improvement of fuel efficiency and extension of a continuous power generating time.

### (First Embodiment)

In a first embodiment of this invention, a fuel supply control circuit is newly disposed in a direct-type methanol fuel cell system of a type to spontaneously supply liquid fuel from a fuel tank to an electromotive unit. This fuel supply control circuit compares a charging voltage of an auxiliary power supply unit with first and second threshold values, respectively. Moreover, as a result of this comparison, in a case where the charging voltage of the auxiliary power supply unit is not less than the first threshold value, or the charging voltage of the auxiliary power supply unit is not more than the second threshold value, the circuit interrupts the supply of the liquid fuel from the fuel tank to the liquid-type fuel electromotive unit.

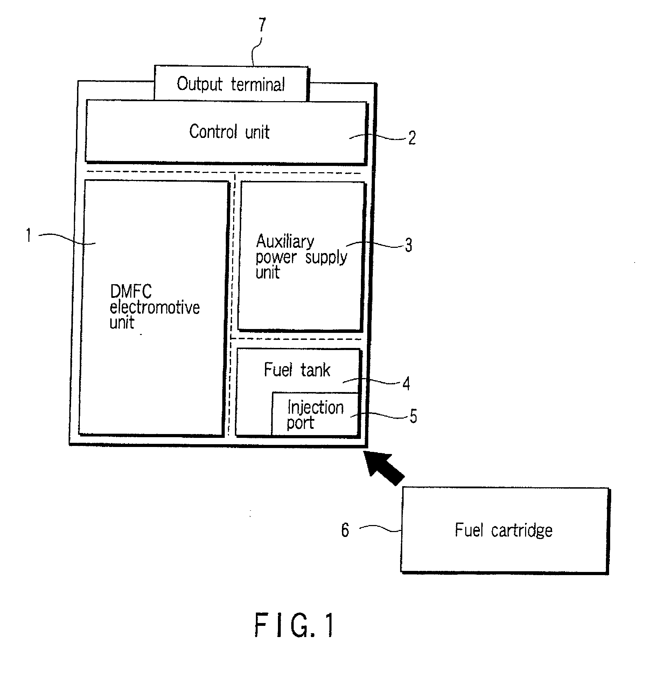

FIG. 1 is a schematic constitution diagram of a direct-type methanol fuel cell (hereinafter abbreviated as DMFC) in a first embodiment of a liquid-type fuel cell system of the present invention. This DMFC system contains a DMFC electromotive unit 1, a control unit 2, an auxiliary power supply unit 3, and a fuel tank 4 in a housing.

In the DMFC electromotive unit 1, an electrolytic film is disposed between an anode and a cathode each of which includes a collector and a catalyst layer. Moreover, methanol is supplied as fuel to the anode catalyst layer to generate protons by catalytic reaction. On the other hand, air is supplied to the cathode. Moreover, the protons which have passed through the electrolyte are allowed to react with oxygen included in air supplied as described above in the cathode catalyst layer to thereby generate power.

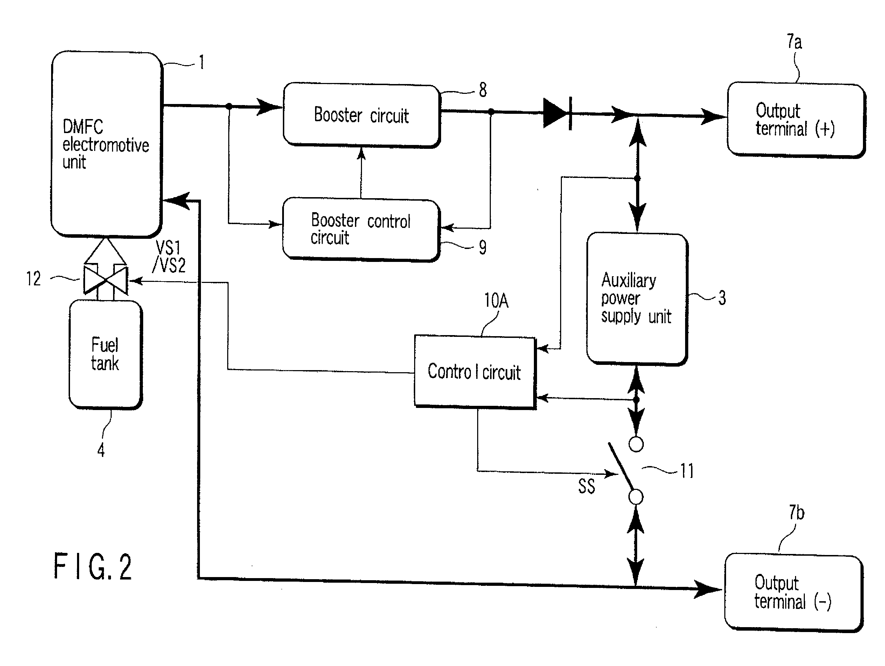

Methanol is contained as the fuel in the fuel tank 4. Methanol is supplied to the anode catalyst layer of the DMFC electromotive unit 1 through a supply path having an electromagnetic valve (shown in FIG. 2 described later) 12. The fuel tank 4 is provided with an injection port 5. A fuel cartridge (not shown) is detachably attached to this injection port 5, and the fuel tank 4 is replenished with the fuel from the fuel cartridge.

The auxiliary power supply unit 3 includes a secondary cell. This secondary cell is charged with the power output from the DMFC electromotive unit 1. This auxiliary power supply unit 3 supplies an auxiliary power to compensate for deficit of the power output from the DMFC electromotive unit 1 from the secondary cell to an electronic device (not shown) in accordance with a load on the electronic device which is a power supply object. It is to be noted that as the electronic device, there is presumed a portable personal computer, a personal digital assistant (PDA), a portable audio or video player, a cellular phone or the like.

The control unit 2 controls the supply of a power voltage to the electronic device, and is constituted as follows. FIG. 2 is a circuit block diagram mainly showing a constitution of this control unit 2.

That is, the control unit 2 includes a booster circuit 8, a booster control circuit 9, a fuel supply control circuit 10A, and a power supply switch 11. These circuits are formed on one circuit substrate. The booster circuit 8 is constituted of, for example, a DC-DC converter.

The booster control circuit 9 compares an output voltage (input voltage to the booster circuit 8) of the DMFC electromotive unit 1 with a threshold value. Moreover, as a result of this comparison, the circuit controls the output voltage of the booster circuit 8 at a time when the input voltage to the booster circuit 8 is smaller than the threshold value. This optimizes the output voltage of the DMFC electromotive unit 1. The booster control circuit 9 compares the output voltage of the booster circuit 8 with another threshold value. Moreover, when the output voltage of the booster circuit 8 is feedback-controlled based on a difference between the values, the output voltage of the booster circuit 8 is stabilized.

The fuel supply control circuit 10A includes an analog-to-digital (A/D) converter, a microcomputer, and a digital-to-analog (D/A) converter. The analog-to-digital (A/D) converter detects a charging voltage value between opposite ends of the auxiliary power supply unit 3, and outputs a digital signal of the detected charging voltage value. The digital-to-analog (D/A) converter converts, into an analog signal, a valve opening control signal and a closing control signal output from the microcomputer to supply the signal to the electromagnetic valve 12.

The microcomputer executes a fuel supply control in accordance with a fuel supply control program stored beforehand. In this fuel supply control, the microcomputer compares the detected charging voltage value with preset first and second threshold values. Moreover, the microcomputer selectively outputs the valve opening control signal or the closing control signal in accordance with the comparison result.

Next, there will be described an operation of the DMFC system constituted as described above.

In a case where the DMFC system is used as a power supply, a power supply terminal (not shown) of an electronic device is connected to a positive terminal 7a and a negative terminal 7b of an output terminal 7. Then, a voltage VB1 output from the DMFC electromotive unit 1 is raised by the booster circuit 8, and thereafter supplied from the positive terminal 7a and the minus terminal 7b of the output terminal 7 to the electronic device. At this time, if a load on the electronic device varies, and a required power cannot be supplied by the only output voltage of the booster circuit 8, a power for the deficit is supplied to the electronic device from the secondary cell of the auxiliary power supply unit 3. That is, the power is supplied to the electronic device by a hybrid system.

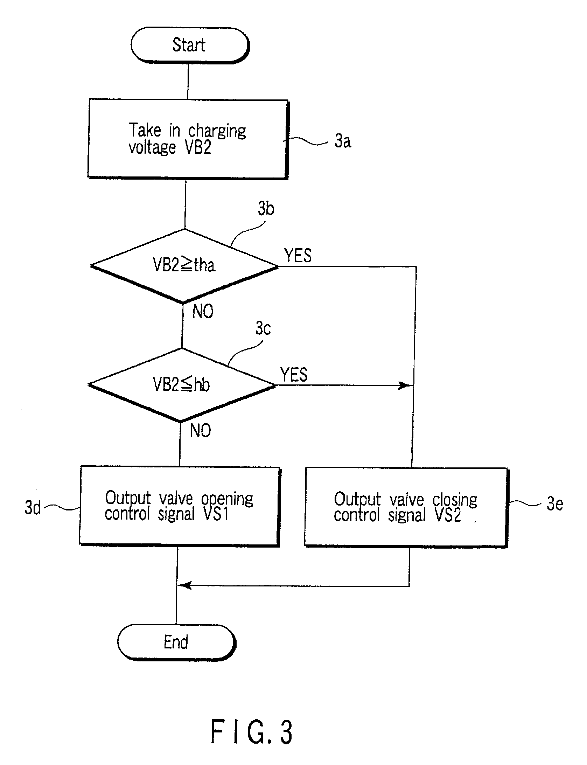

In addition, the fuel supply control circuit 10A executes the fuel supply control as follows in this state. FIG. 3 is a flowchart showing a control procedure and control contents.

That is, the fuel supply control circuit 10A periodically takes in a charging voltage value VB2 of the auxiliary power supply unit 3 in step 3a. Moreover, every time the charging voltage value VB2 is newly taken in, this charging voltage value VB2 is compared with first and second threshold values Tha, Thb in steps 3b and 3c, respectively. At this time, the first and second threshold values Tha, Thb are set to a fully charging voltage value and a discharge voltage value of the auxiliary power supply unit 3, respectively.

As a result of the above-described comparison, it is assumed that the charging voltage value VB2 is below the first threshold value Tha and above the second threshold value Thb. In this case, the fuel supply control circuit 10A judges that a charged state of the auxiliary power supply unit 3 is adequate, and maintains an output of a valve opening control signal VS1 in step 3d. Therefore, the electromagnetic valve 12 keeps its opening state, and the supply of the fuel from the fuel tank 4 to the DMFC electromotive unit 1 is continued.

On the other hand, as a result of the above-described comparison, it is assumed that the charging voltage value VB2 is not less than the first threshold value Tha or that the charging voltage value VB2 is not more than the second threshold value Thb. In this case, the fuel supply control circuit 10A judges that the auxiliary power supply unit 3 is brought into a fully charged state or a fully discharged state. Moreover, the circuit outputs a valve closing control signal VS2 in step 3e. This valve closing control signal VS2 is converted into the analog signal by the D/A converter, and thereafter supplied to the electromagnetic valve 12. As a result, the electromagnetic valve 12 is closed. Thereafter, the fuel supply from the fuel tank 4 to the DMFC electromotive unit 1 is interrupted.

As described above, according to the first embodiment, in the DMFC system of the type to spontaneously supply the fuel, the fuel supply control circuit 10A detects the charging voltage VB2 of the auxiliary power supply unit 3, and compares this detected charging voltage VB2 with the first and second threshold values Tha, Thb, respectively. Moreover, the circuit interrupts the supply of the fuel from the fuel tank 4 to the DMFC electromotive unit 1 in a case where the charging voltage VB2 of the auxiliary power supply unit 3 is not less than the first threshold value Tha, or the charging voltage VB2 of the auxiliary power supply unit 3 is not more than the second threshold value Thb.

Therefore, when the charged/discharged state of the auxiliary power supply unit 3 reaches the fully charged or fully discharged state, the supply of the fuel from the fuel tank 4 to the DMFC electromotive unit 1 is automatically interrupted. Therefore, wasteful supply of the fuel can be stopped to improve the fuel efficiency and extend the continuous power generating time of the system.

### (Second Embodiment)

A second embodiment of this invention newly includes: an attachment detector which detects whether or not a DMFC system is attached to an electronic device; and a fuel supply control circuit. Moreover, in a case where the attachment detector detects that the DMFC system has been removed from the electronic device, the fuel supply control circuit interrupts supply of liquid fuel from a fuel tank to a DMFC electromotive unit.

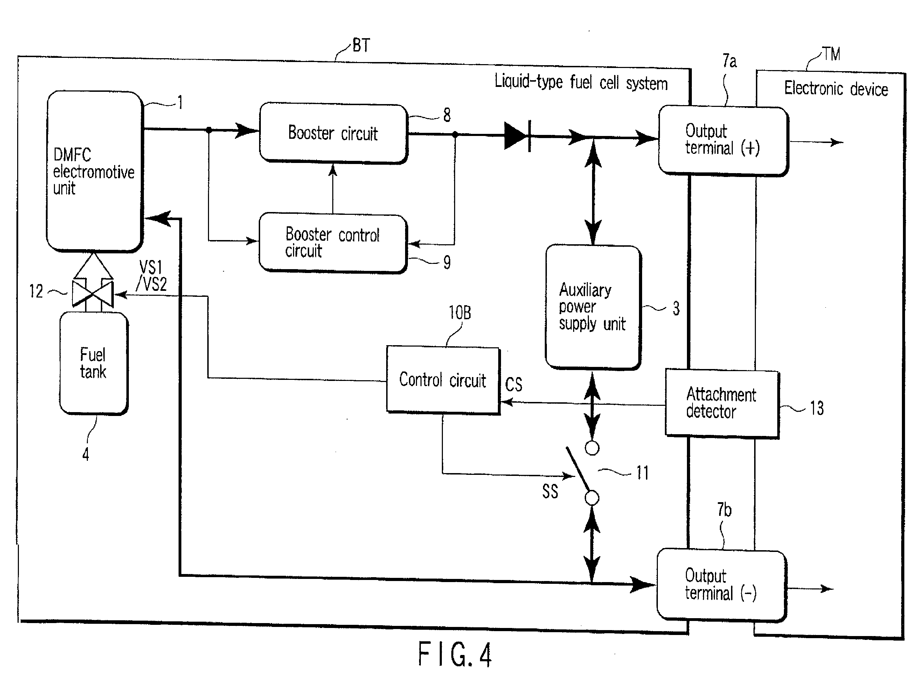

FIG. 4 is a circuit block diagram showing the second embodiment of a liquid-type fuel cell system of the present invention. In the drawing, BT denotes a DMFC system as the liquid-type fuel cell system, and TM denotes an electronic device such as a portable personal computer or PDA, or a cellular phone. It is to be noted that in the drawing, the same parts as those of FIG. 2 are denoted with the same reference numerals, and detailed description is omitted.

The DMFC system BT newly includes an attachment detector 13 and a fuel supply control circuit 10B. The attachment detector 13 is constituted of a mechanical switch or an optical switch which turns on at a time when the DMFC system BT is attached to the electronic device TM, and the detector supplies its on/off signal CS to the fuel supply control circuit 10B.

The fuel supply control circuit 10B includes an interface, a microcomputer, and a D/A converter. The interface receives the on/off signal CS supplied from the attachment detector 13. The microcomputer executes a fuel supply control in accordance with a fuel supply control program stored beforehand. The D/A converter converts, into analog signals, a valve opening control signal and a closing control signal output from the microcomputer to supply the signals to an electromagnetic valve 12.

The microcomputer judges whether or not the DMFC system BT is attached to the electronic device TM based on the on/off signal CS supplied from the attachment detector 13. Moreover, the microcomputer selectively outputs a valve opening control signal VS1 or a closing control signal VS2 in accordance with the judgment result, and opens and closes the electromagnetic valve 12.

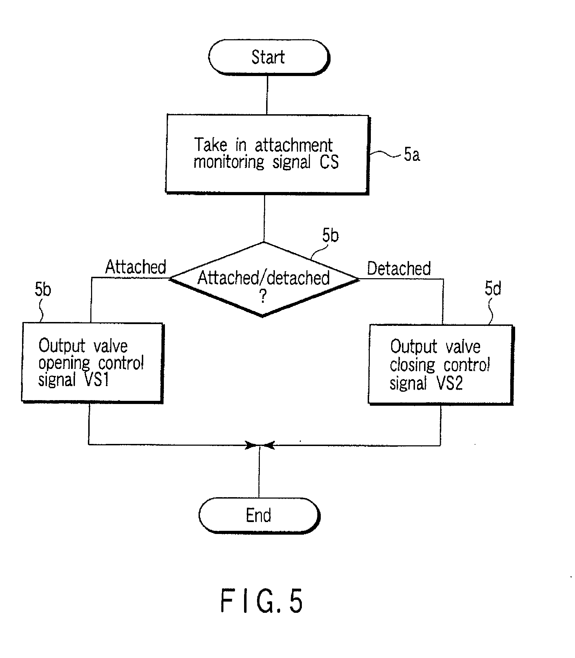

According to such constitution, as shown in FIG. 5, first in step 5a, the fuel supply control circuit 10B periodically takes in the on/off signal CS output from the attachment detector 13 in a state in which the DMFC system BT is attached to the electronic device TM. Moreover, it is judged in step 5b whether or not the DMFC system BT is attached to the electronic device TM based on this taken on/off signal CS.

Furthermore, it is assumed as a result of this judgment that the DMFC system BT is attached to the electronic device TM. In this case, the fuel supply control circuit 10B maintains an output of the valve opening control signal VS1 in step 5c. Therefore, the electromagnetic valve 12 keeps its opened state, and the fuel supply from a fuel tank 4 to a DMFC electromotive unit 1 is continued.

On the other hand, it is now assumed that a user has detached the DMFC system BT from the electronic device TM. In this case, the signal CS output from the attachment detector 13 turns to an off signal. Therefore, the fuel supply control circuit 10B judges that the DMFC system BT has been detached from the electronic device TM, and the circuit outputs the valve closing control signal VS2 in step 5d. This valve closing control signal VS2 is converted into the analog signal by the D/A converter, and thereafter supplied to the electromagnetic valve 12. As a result, the electromagnetic valve 12 is closed, and thereafter the fuel supply from the fuel tank 4 to the DMFC electromotive unit 1 is interrupted. Moreover, the fuel supply control circuit 10A turns off a power supply switch 11. Therefore, charging and discharging of an auxiliary power supply unit 3 are stopped, and accordingly safety of the auxiliary power supply unit 3 is secured.

Therefore, according to the second embodiment, when the DMFC system BT is detached from the electronic device TM, the supply of the fuel from the fuel tank 4 to the DMFC electromotive unit 1 is automatically interrupted. Therefore, wasteful supply of the fuel is stopped to improve fuel efficiency. In addition, it is possible to extend a continuous power generating time of the system.

### (Third Embodiment)

In a third embodiment of this invention, in a case where an electronic device is provided with a circuit which generates a signal to display an operative state, and an output terminal which outputs an operation display signal generated by this circuit to the outside, an input terminal of the operation display signal and a fuel supply control circuit are newly disposed in a DMFC system. Moreover, the fuel supply control circuit judges whether or not the electronic device is brought into the operative state based on the operation display signal output from the electronic device, and the circuit interrupts supply of liquid fuel from a fuel tank to a DMFC electromotive unit in a case where the device is brought into an inoperative state.

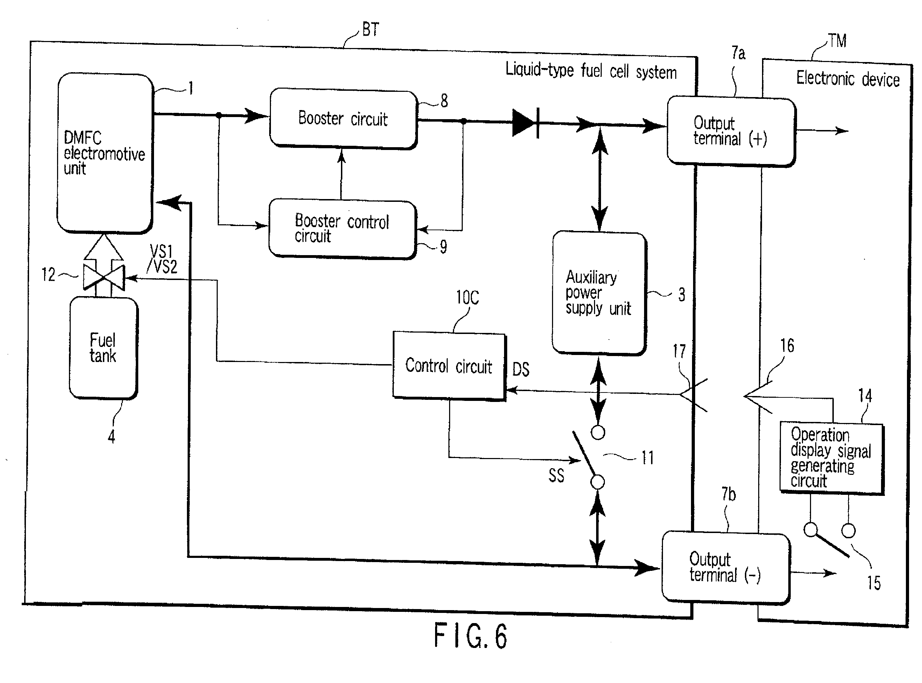

FIG. 6 is a circuit block diagram showing the third embodiment of a liquid-type fuel cell system of this invention. It is to be noted that in the drawing, the same parts as those of FIG. 2 or 4 are denoted with the same reference numerals, and detailed description is omitted.

An electronic device TM is provided with an operation display signal generating circuit 14 and an output terminal 16. The output terminal 16 outputs, to the outside, an operation display signal DS generated by the operation display signal generating circuit 14. The operation display signal generating circuit 14 outputs the operation display signal DS to the effect that a user operable operation switch (e.g., power supply switch) 15 of the electronic device TM is turned on.

On the other hand, a DMFC system BT is newly provided with an input terminal 17 of the operation display signal DS, and a fuel supply control circuit 10C. The fuel supply control circuit 10C includes an interface, a microcomputer, and a D/A converter. The interface receives the operation display signal DS input via the input terminal 17. The microcomputer executes a fuel supply control in accordance with a fuel supply control program stored beforehand. The D/A converter converts, into analog signals, a valve opening control signal VS1 and a closing control signal VS2 output from the microcomputer to supply the signals to an electromagnetic valve 12.

The microcomputer judges whether or not the electronic device TM is brought into an operative state based on the operation display signal DS output from the electronic device TM. Moreover, the microcomputer selectively outputs the valve opening control signal VS1 or the closing control signal VS2 in accordance with this judgment result, and opens and closes the electromagnetic valve 12.

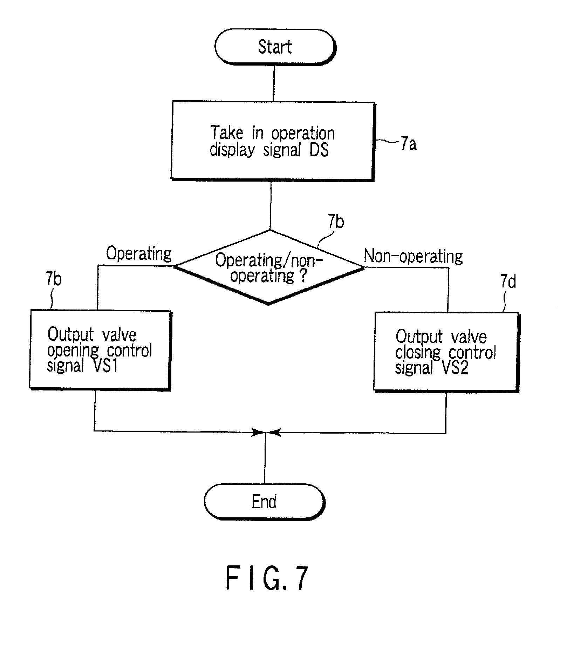

According to such constitution, as shown in FIG. 7, in step 7a, the fuel supply control circuit 10C periodically takes in the operation display signal DS output from the electronic device TM in a state in which the DMFC system BT is attached to the electronic device TM. Moreover, it is judged in step 7b whether or not the electronic device TM is brought into an operative state based on this taken operation display signal DS.

Furthermore, it is assumed as a result of the judgment that the electronic device TM is brought into the operative state. In this case, the fuel supply control circuit 10C maintains an output of the valve opening control signal VS1 in step 7c. Therefore, the electromagnetic valve 12 keeps its opened state, and the fuel supply from a fuel tank 4 to a DMFC electromotive unit 1 is continued.

On the other hand, it is now assumed that a user has turned off the operation switch (power supply switch) 15 in order to stop the operation of the electronic device TM. In this case, the operation display signal DS urns off. The fuel supply control circuit 10C accordingly judges that the electronic device TM is brought into an inoperative state, and the circuit outputs the valve closing control signal VS2 in step 7d. This valve closing control signal VS2 is converted into the analog signal by the D/A converter, and thereafter supplied to the electromagnetic valve 12. As a result, the electromagnetic valve 12 is closed, and thereafter the fuel supply from the fuel tank 4 to the DMFC electromotive unit 1 is interrupted. In a case where power supply may be completely stopped during non-operation, the fuel supply control circuit 10A turns off a power supply switch 11. Therefore, charging and discharging of an auxiliary power supply unit 3 are stopped, and accordingly safety of the auxiliary power supply unit 3 is secured.

Therefore, according to the third embodiment, when the operation switch 15 is turned off to bring the electronic device TM into the inoperative state, the supply of the fuel from the fuel tank 4 to the DMFC electromotive unit 1 is automatically interrupted in the DMFC system BT. Therefore, wasteful supply of the fuel is stopped to improve fuel efficiency. In addition, it is possible to extend a continuous power generating time of the system.

Moreover, even while the DMFC system BT is attached to the electronic device TM, a power generating operation of the DMFC system BT stops in conjunction with an operation of turning off the operation switch 15 in the electronic device TM. Therefore, the user does not have to attach or detach the DMFC system BT with respect to the electronic device TM. In consequence, a handling property of the DMFC system BT can be improved.

Further in this embodiment, in a case where the operation display signal DS output from the electronic device TM is cut, it is judged that the electronic device TM is brought into the inoperative state to interrupt the fuel supply to the DMFC electromotive unit 1. Therefore, even in a case where the DMFC system BT is detached from the electronic device TM, the fuel supply to the DMFC electromotive unit 1 can be interrupted.

### (Another Embodiment)

In the first, second, and third embodiments, supply of fuel is controlled in accordance with: (1) a charged or discharged state of an auxiliary power supply unit 3; (2) whether or not a DMFC system BT is attached to an electronic device TM; and (3) whether or not the electronic device TM is brought into an operative state, respectively. However, the present invention is not limited to each embodiment, the supply of the fuel may be controlled in accordance with (1) and (2), or (1) and (3), and further the supply of the fuel may be controlled in accordance with (2) and (3). Needless to say, the supply of the fuel may be controlled in accordance with (1), (2), and (3).

Moreover, in the above-described embodiments, the supply of the fuel is turned on/off in accordance with the above (1), (2), and (3), but the supply of the fuel may be variably controlled in an adaptive manner in accordance with a result of monitoring of, for example, a change of a charged or discharged state of the auxiliary power supply unit 3 in multiple stages by use of a threshold value of 3 or more. In this case, it is possible to constantly supply an optimum amount of fuel in accordance with the charged or discharged state of the auxiliary power supply unit 3. Accordingly, wasteful fuel supply can be further reduced, and fuel efficiency can be further improved.

Moreover, in the above-described embodiments, there are disposed the power supply control circuits 10A, 10B, and 10C each including the microcomputer, and the microcomputer executes power supply control processing. However, the present invention is not limited to the embodiments, and needless to say, each of the power supply control circuits 10A, 10B, and 10C may be constituted of hardware including a comparator and a logic circuit.

Furthermore, in the above first embodiment, the charging voltage value VB2 of the auxiliary power supply unit 3 is detected to thereby judge the charged state of the auxiliary power supply unit 3. However, a charging current value is detected, and the charged state of the auxiliary power supply unit 3 may be judged based on the detected value.

In addition, in the above third embodiment, the fuel supply from the fuel tank 4 to the DMFC electromotive unit 1 is controlled in accordance with the on or off state of the operation switch (power supply switch) 15 in the electronic device TM. However, the present invention is not limited to the embodiment, and the fuel supply from the fuel tank 4 to the DMFC electromotive unit 1 may be interrupted in a sleep mode or the like in which the operative state of the electronic device TM is similar to a state at a time when the power switch turns off. In a case where the electronic device includes a battery saving mode, the fuel supply from the fuel tank 4 to the DMFC electromotive unit 1 may be limited to supply of a small amount of fuel as compared with a usual operation mode.

Moreover, in the above-described embodiments, there has been described an example of the DMFC system in which methanol is used as the fuel. However, the present invention is not limited to the embodiments, and as the liquid fuel, there may be used, for example, an aqueous solution of ethanol, diethyl ether, dimethoxymethane, formaldehyde, formic acid, methyl formate, methyl orthoformate, trioxane, 1-propanol, 2-propanol, 3-propanol, ethylene glycol, glyoxal, or glycerin. Furthermore, there may be used an aqueous solution of a compound of each of the above-described chemical substances.

In addition, as to a type and a constitution of the electronic device, a type and a constitution of the liquid-type fuel cell system, values of the first and second threshold values Tha, Thb, a type of the fuel supply valve, fuel supply control procedure and contents and the like, the present invention may be variously modified and implemented without departing from the scope.

In short, this invention is not limited to the above embodiments as such, and constituting elements may be modified and embodied without departing from the scope in an implementation stage. Various inventions can be formed by an appropriate combination of a plurality of constituting elements disclosed in the above embodiments. For example, several constituting elements may be removed from all constituting elements described in each embodiment. Furthermore, constituting elements of different embodiments may be appropriately combined.

### Industrial Applicability

Since a liquid-type fuel cell system of this invention is a system of a type to spontaneously supply fuel, the system can be constituted in a small size. Additionally, although this type spontaneously supplies the fuel, fuel efficiency is satisfactory, and a continuous power generating time can be extended.

Therefore, the system can be used as a power supply of a portable electronic device such as a mobile communication terminal, a portable personal computer, a personal digital assistant (PDA), a portable video or audio player, or a portable game machine.

## Claims

1. A liquid-type fuel cell system to be used with an external load, wherein the external load is configured to operate at a power higher than a power output of a liquid-type fuel cell unit of the liquid-type fuel cell system, the liquid-type fuel cell system comprising:
the liquid-type fuel cell unit (1) configured to extract protons from liquid fuel to generate a power and to output a generated first power;
a fuel supply unit (4) configured to spontaneously supply the liquid fuel to the liquid-type fuel cell unit (1);
an auxiliary power supply unit (3) connected to be charged with the first power output from the liquid-type fuel cell unit (1) and configured to output a charged second power; and
a control circuit (2) configured to monitor a charged state of the auxiliary power supply unit (3) and to control the supply of the liquid fuel from the fuel supply unit (4) to the liquid-type fuel cell unit (1) based on the monitoring result;
**characterized in that**
the control circuit (2) is configured to compare a charging voltage of the auxiliary power supply unit with a second threshold value set in accordance with a fully discharged state and to interrupt the supply of the liquid fuel from the fuel supply unit (4) to the liquid-type fuel cell unit (1) in a case where the charging voltage of the auxiliary power supply unit (3) is not more than the second threshold value.

2. The liquid-type fuel cell system according to claim 1, **characterized in that** the control circuit (2) is configured to compare a charging voltage of the auxiliary power supply unit (1) with a first threshold value set in accordance with a fully charged state and to interrupt the supply of the liquid fuel from the fuel supply unit (4) to the liquid-type fuel cell unit (1) in a case where the charging voltage of the auxiliary power supply unit (3) is not less than the first threshold value.

3. The liquid-type fuel cell system according to any one of claims 1 or 2, **characterized by** further comprising:
a detector (13) configured to detect whether or not the liquid-type fuel cell system is attached to a load device;
wherein the control circuit (2) is configured to interrupt the supply of the liquid fuel from the fuel supply unit (4) to the liquid-type fuel cell unit (1) in a case where it is detected that the liquid-type fuel cell system has been removed from the load device.

4. The liquid-type fuel cell system according to any one of claims 1 to 3, **characterized by** further comprising:
a receiver which receives, from a load device (TM), an operation display signal indicating presence of an operation of the load device (TM);
wherein the control circuit (2) is configured to interrupt the supply of the liquid fuel from the fuel supply unit (4) to the liquid-type fuel cell unit (1) in a case where the operation display signal received by the receiver indicates an inoperative state of the load device.

5. A control circuit for a liquid-type fuel cell system according to any one of claims 1 to 4, **characterized in that** the liquid-type fuel cell system includes:
a monitoring unit configured to monitor a charged state of the auxiliary power supply unit; and
a control circuit (2) configured to control the supply of the liquid fuel from the fuel supply unit (4) to the liquid-type fuel cell unit (1) based on the monitoring result of the monitoring unit;
wherein the control circuit (2) is configured to compare a charging voltage of the auxiliary power supply unit with a second threshold value set in accordance with a fully discharged state and to interrupt the supply of the liquid fuel from the fuel supply unit (4) to the liquid-type fuel cell unit (1) in a case where the charging voltage of the auxiliary power supply unit (3) is not more than the second threshold value.

## Patentansprüche

1. Flüssigkeitstyp-Brennstoffzellensystem, das mit einer externen Last zu verwenden ist, wobei die externe Last konfiguriert ist, um mit einer Energie betrieben zu werden, die größer als eine Energieausgabe einer Flüssigkeitstyp-Brennstoffzelleneinheit des Flüssigkeitstyp-Brennstoffzellensystems ist, wobei das Flüssigkeitstyp-Brennstoffzellensystem aufweist:
die Flüssigkeitstyp-Brennstoffzelleneinheit (1), die konfiguriert ist, um Protonen aus einem Flüssigbrennstoff zur Energieerzeugung zu extrahieren, und um eine erzeugte erste Energie auszugeben,
eine Brennstoffzufuhreinheit (4), die konfiguriert ist, um den Flüssigbrennstoff der Flüssigkeitstyp-Brennstoffzelleneinheit (1) spontan zuzuführen,
eine Hilfs-Energiezufuhreinheit (3), die verbunden ist, um mit der ersten Energieausgabe von der Flüssigkeitstyp-Brennstoffzelleneinheit (1) geladen zu werden, und konfiguriert ist, um eine geladene zweite Energie auszugeben, und
eine Steuerschaltung (2), die konfiguriert ist, um einen geladenen Zustand der Hilfs-Energiezufuhreinheit (3) zu überwachen, und um die Zufuhr des Flüssigbrennstoffs von der Brennstoffzufuhreinheit (4) zu der Flüssigkeitstyp-Brennstoffzelleneinheit (1) basierend auf dem Überwachungsergebnis zu steuern,
**dadurch gekennzeichnet, dass**
die Steuerschaltung (2) konfiguriert ist, um eine Ladespannung der Hilfs-Energiezufuhreinheit mit einem zweiten Schwellenwert zu vergleichen, der gemäß einem vollständig entladenen Zustand eingestellt ist, und um die Zufuhr des Flüssigbrennstoffs von der Brennstoffzufuhreinheit (4) zu der Flüssigkeitstyp-Brennstoffzelleneinheit (1) für den Fall zu unterbrechen, dass die Ladespannung der Hilfs-Energiezufuhreinheit (3) nicht größer als der zweite Schwellenwert ist.

2. Flüssigkeitstyp-Brennstoffzellensystem nach Anspruch 1, wobei die Steuerschaltung (2) konfiguriert ist, um eine Ladespannung der Hilfs-Energiezufuhreinheit (1) mit einem ersten Schwellenwert zu vergleichen, der gemäß einem vollständig geladenen Zustand eingestellt ist, und um die Zufuhr des Flüssigbrennstoffs von der Brennstoffzufuhreinheit (4) zu der Flüssigkeitstyp-Brennstoffzelleneinheit (1) für den Fall zu unterbrechen, dass die Ladespannung der Hilfs-Energiezufuhreinheit (3) nicht kleiner als der erste Schwellenwert ist.

3. Flüssigkeitstyp-Brennstoffzellensystem nach einem der Ansprüche 1 oder 2, ferner aufweisend:
einen Detektor (13), der konfiguriert ist, um zu erfassen, ob das Flüssigkeitstyp-Brennstoffzellensystem an einer Lastvorrichtung angebracht ist oder nicht,
wobei die Steuerschaltung (2) konfiguriert ist, um die Zufuhr des Flüssigbrennstoffs von der Brennstoffzufuhreinheit (4) zu der Flüssigkeitstyp-Brennstoffzelleneinheit (1) für den Fall zu unterbrechen, für welchen erfasst worden ist, dass das Flüssigkeitstyp-Brennstoffzellensystem von der Lastvorrichtung entfernt worden ist.

4. Flüssigkeitstyp-Brennstoffzellensystem nach einem der Ansprüche 1 bis 3, ferner aufweisend:
einen Empfänger, welcher von einer Lastvorrichtung (TM) ein Betriebsanzeigesignal empfängt, das die Präsenz eines Betriebs der Lastvorrichtung (TM) anzeigt,
wobei die Steuerschaltung (2) konfiguriert ist, um die Zufuhr des Flüssigbrennstoffs von der Brennstoffzufuhreinheit (4) zu der Flüssigkeitstyp-Brennstoffzelleneinheit (1) für den Fall zu unterbrechen, dass das von dem Empfänger empfangene Betriebsanzeigesignal einen nicht betriebsfähigen Zustand der Lastvorrichtung anzeigt.

5. Steuerschaltung für ein Flüssigkeitstyp-Brennstoffzellensystem nach einem der Ansprüche 1 bis 4, wobei das Flüssigkeitstyp-Brennstoffzellensystem umfasst:
eine Überwachungseinheit, die konfiguriert ist, um einen geladenen Zustand der Hilfs-Energiezufuhreinheit zu überwachen, und
eine Steuerschaltung (2), die konfiguriert ist, um die Zufuhr des Flüssigbrennstoffs von der Brennstoffzufuhreinheit (4) zu der Flüssigkeitstyp-Brennstoffzelleneinheit (1) basierend auf dem Überwachungsergebnis der Überwachungseinheit zu steuern,
wobei die Steuerschaltung (2) konfiguriert ist, um eine Ladespannung der Hilfs-Energiezufuhreinheit mit einem zweiten Schwellenwert zu vergleichen, der gemäß einem vollständig entladenen Zustand eingestellt ist, und um die Zufuhr des Flüssigbrennstoffs von der Brennstoffzufuhreinheit (4) zu der Flüssigkeitstyp-Brennstoffzelleneinheit (1) für den Fall zu unterbrechen, dass die Ladespannung der Hilfs-Energiezufuhreinheit (3) nicht größer als der zweite Schwellenwert ist.

## Revendications

1. Système de pile à combustible de type liquide à utiliser avec une charge externe, dans lequel la charge externe est configurée pour fonctionner à une puissance supérieure à une sortie de puissance d'une unité de pile à combustible de type liquide du système de pile à combustible de type liquide, le système de pile à combustible de type liquide comprenant :
l'unité de pile à combustible de type liquide (1) configurée pour extraire des protons d'un combustible liquide afin de générer une puissance et de fournir en sortie une première puissance générée ;
une unité d'alimentation en combustible (4) configurée pour alimenter spontanément en combustible liquide l'unité de pile à combustible de type liquide (1) ;
une unité d'alimentation électrique auxiliaire (3) connectée pour être chargée avec la première sortie de puissance en provenance de l'unité de pile à combustible de type liquide (1) et configurée pour fournir en sortie une seconde puissance chargée ; et
un circuit de commande (2) configuré pour surveiller un état chargé de l'unité d'alimentation électrique auxiliaire (3) et pour commander l'alimentation en combustible liquide, en provenance de l'unité d'alimentation en combustible (4), de l'unité de pile à combustible de type liquide (1) en se basant sur le résultat de la surveillance ;
**caractérisé en ce que**
le circuit de commande (2) est configuré pour comparer une tension de charge de l'unité d'alimentation électrique auxiliaire à une seconde valeur seuil établie en conformité avec un état entièrement déchargé et pour interrompre l'alimentation en combustible liquide, en provenance de l'unité d'alimentation en combustible (4), de l'unité de pile à combustible de type liquide (1) dans un cas où la tension de charge de l'unité d'alimentation électrique auxiliaire (3) n'est pas supérieure à la seconde valeur seuil.

2. Système de pile à combustible de type liquide selon la revendication 1, **caractérisé en ce que** le circuit de commande (2) est configuré pour comparer une tension de charge de l'unité d'alimentation électrique auxiliaire (1) à une première valeur seuil établie en conformité avec un état entièrement chargé et pour interrompre l'alimentation en combustible liquide, en provenance de l'unité d'alimentation en combustible (4), de l'unité de pile à combustible de type liquide (1) dans un cas où la tension de charge de l'unité d'alimentation électrique auxiliaire (3) n'est pas inférieure à la première valeur seuil.

3. Système de pile à combustible de type liquide selon l'une quelconque des revendications 1 ou 2, **caractérisé en ce qu'**il comprend en outre :
un détecteur (13) configuré pour détecter si le système de pile à combustible de type liquide est relié à un dispositif de charge ;
dans lequel le circuit de commande (2) est configuré pour interrompre l'alimentation en combustible liquide, en provenance de l'unité d'alimentation en combustible (4), de l'unité de pile à combustible de type liquide (1) dans le cas où il est détecté que le système de pile à combustible de type liquide a été retiré du dispositif de charge.

4. Système de pile à combustible de type liquide selon l'une quelconque des revendications 1 à 3, **caractérisé en ce qu'**il comprend en outré :
un récepteur qui reçoit, en provenance d'un dispositif de charge (TM), un signal d'affichage de fonctionnement indiquant la présence d'un fonctionnement du dispositif de charge (TM) ;
dans lequel le circuit de commande (2) est configuré pour interrompre l'alimentation en combustible liquide, en provenance de l'unité d'alimentation en combustible (4), de l'unité de pile à combustible de type liquide (1) dans un cas où le signal d'affichage de fonctionnement reçu par le récepteur indique un état non fonctionnel du dispositif de charge.

5. Circuit de commande pour un système de pile à combustible de type liquide selon l'une quelconque des revendications 1 à 4, **caractérisé en ce que** le système de pile à combustible de type liquide inclus :
une unité de surveillance configurée pour surveiller un état chargé de l'unité d'alimentation électrique auxiliaire ; et
un circuit de commande (2) configuré pour commander l'alimentation en combustible liquide, en provenance de l'unité d'alimentation en combustible (4) à l'unité de pile à combustible de type liquide (1) en se basant sur le résultat de surveillance de l'unité de surveillance ;
dans lequel le circuit de commande (2) est configuré pour comparer une tension de charge de l'unité d'alimentation électrique auxiliaire à une seconde valeur seuil établie en conformité avec un état entièrement déchargé et pour interrompre l'alimentation en combustible liquide, en provenance de l'unité d'alimentation en combustible (4), de l'unité de pile à combustible de type liquide (1) dans un cas où la tension de charge de l'unité d'alimentation électrique auxiliaire (3) n'est pas supérieure à la seconde valeur seuil.
